# EUROPÄISCHE PATENTSCHRIFT

(11) **EP 3 596 506 B1**
(45) Veröffentlichungstag und Bekanntmachung des Hinweises auf die Patenterteilung: **17.07.2024**
(21) Anmeldenummer: 18710464.1
(22) Anmeldetag: 12.03.2018
(51) Int. Cl.: G01S 17/931, G01S 7/481, G01S 17/42, G01S 17/10

(54) **OPTISCHE ABSTRAHLVORRICHTUNG FÜR LASERPULSE MIT SELEKTIVER OPTIK**
OPTICAL EMISSION DEVICE FOR LASER PULSES WITH SELECTIVE OPTICAL SYSTEM
DISPOSITIF DE RAYONNEMENT OPTIQUE POUR IMPULSIONS LASER À OPTIQUE SÉLECTIVE

(30) Priorität: 13.03.2017 DE 102017105210
(43) Veröffentlichungstag der Anmeldung: 22.01.2020
(73) Patentinhaber: Valeo Schalter und Sensoren GmbH, 74321 Bietigheim-Bissingen (DE)
(72) Erfinder: NGUYEN, Ho-Hoai-Duc, 74321 Bietigheim-Bissingen (DE); LIN, Lin, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Pothmann, Karsten
(86) Internationale Anmeldenummer: PCT/EP2018/056048
(87) Internationale Veröffentlichungsnummer: WO 2018/166960

(56) Entgegenhaltungen:
- WO-A1-03/027752
- WO-A1-2011/026452
- WO-A1-2012/034881
- DE-A1- 102005 007 945
- DE-A1- 102012 025 281
- DE-A1- 102012 109 183

## Beschreibung

Die vorliegende Erfindung betrifft eine optische Abstrahlvorrichtung für Laserpulse, insbesondere zur Verwendung in einem Lidar zur Verwendung in einem Fahrzeug, mit einer Lasereinheit, die ausgeführt ist, Laserpulse abzustrahlen, und einer Ablenkeinheit, die im Strahlengang der von der Lasereinheit abgestrahlten Laserpulse angeordnet ist, und die von der Lasereinheit abgestrahlten Laserpulse in einem Ablenkbereich ablenkt.

Zusätzlich betrifft die vorliegende Erfindung einen Laserscanner mit einer solchen optischen Abstrahlvorrichtung für Laserpulse und einer Sensoreinheit zum Empfang einer Reflektion des abgestrahlten Laserpulses.

Auch betrifft die vorliegende Erfindung ein Fahrassistenzsystem mit einer solchen optischen Abstrahlvorrichtung für Laserpulse.

Des Weiteren betrifft die vorliegende Erfindung ein Fahrzeug mit einem solchen Laserscan ner.

Des Weiteren betrifft die vorliegende Erfindung ein Fahrzeug mit einem solchen Fahrassistenzsystem.

In aktuellen Fahrzeugen werden zur Abstands-, Lage- und/oder Konturvermessung von umgebenden Objekten Umgebungssensoren eingesetzt. Hierbei finden vermehrt LiDAR-basierte Systeme wie zum Beispiel Laserscanner Anwendung. Der Begriff LiDAR steht dabei, im englischen für "Light detection and ranging". Laserscanner bilden eine Untergruppe von LiDAR-basierten Systemen, die ihre Umgebung nach der Art eines Rasters mit einzelnen, beabstandeten Messpunkten erfassen
Die LiDAR-basierten Systeme, wie zum Beispiel Laserscanner, können Umgebungsinformationen als Reflektionen von abgestrahlten Laserpulsen erfassen, wobei eine Ablenkeinheit die Laserpulse ablenkt, um einen möglichst großen Ablenkbereich mit dem Laserscanner erfassen zu können.

Jedes dieser LiDAR-basierten Systeme hat somit einen Erfassungswinkelbereich, der auch als "Field of View" (FoV) bezeichnet wird, und der im Wesentlichen durch den Ablenkbereich definiert ist. Der Erfassungswinkelbereich ist ein begrenzter Bereich, in dem die Umgebungsinformationen erfasst werden können. Dabei können von modernen LiDAR-basierten Systemen neben Abstandsinformationen an einzelnen Messpunkten, die sich aus der Laufzeit eines abgestrahlten Laserpulses bis zum Empfang seiner Reflektion an einem Objekt ergeben, auch die Intensitäten der Reflektionen erfasst werden, um dadurch zusätzliche Informationen über die umgebenden Objekte zu erhalten. Die Informationen können kombiniert werden, so dass einzelnen Entfernungsmessungen auch Messwerte für die Intensität der jeweiligen Reflektion zugeordnet werden können.

Bei Laserscannern ist es beispielsweise bekannt, ihren Erfassungswinkelbereich im horizontalen Bereich in Teilsektoren einzuteilen und für jeden der Teilsektoren mit einer bestimmten Taktrate die Abstandswerte von im jeweiligen Teilsektor lokalisierten Objekten zu bestimmen. Die Teilsektoren können beispielsweise nacheinander abgearbeitet werden. Alternativ können die Laserscanner ihren gesamten Erfassungswinkelbereich kontinuierlich abtasten.

Einsatzbereiche, Leistungsfähigkeit und Zuverlässigkeit von Vorrichtungen und Verfahren, in welchen die Messdaten solcher LiDAR-basierter Systeme Verwendung finden, hängen unter anderem von der Größe des horizontalen Erfassungswinkelbereichs der LiDAR-basierten Systeme und von einer Winkelauflösung für benachbarte Messpunkte in dem Erfassungswinkelbereich ab. Aktuelle Laserscanner erreichen dabei beispielsweise einen horizontalen Erfassungswinkel von etwa 100°und eine Winkelauflösung von etwa 0,1°. Dies gilt insbe sondere für Laserscanner mit nicht-mechanischen Ablenkvorrichtungen. Laserscanner mit mechanischen Ablenkvorrichtungen können zwar teilweise einen größeren Erfassungswinkelbereich abdecken. Allerdings sind derartige mechanische Ablenkvorrichtungen relativ langsam und für viele Anforderungen in aktuellen Fahrzeugen und Fahrzeugassistenzsystemen nicht oder nur eingeschränkt geeignet. Zwar sind auch Ansätze mit einer Kombination von zwei benachbarten Laserscannern bekannt, die zusammen einen größeren Erfassungswinkelbereich abdecken. Dies verdoppelt jedoch die Kosten gegenüber der Verwendung eines einzelnen Laserscanners und leidet häufig unter Problemen durch überlappende Bereiche und/oder nicht erfasste Bereiche, insbesondere im Grenzbereich der Erfassungswinkelbereiche der beiden Laserscanner.

In diesem Zusammenhang ist aus der DE 10 2005 045 302 A1 ein Verfahren zum Betrieb eines Abstandssensors für die Umfelderkennung in einem Kraftfahrzeug bekannt, bei welchem Teilsektoren innerhalb eines Erfassungswinkelbereichs des Abstandssensors festgelegt werden, für welche durch den Abstandssensor sequenziell Abstandswerte zu Objekten in der Umgebung des Kraftfahrzeugs bestimmt werden, wird ein mit der Reichweite des Abstandssensors korrelierter Messparameter des Abstandssensors unter den Teilsektoren variiert. Bei einem Abstandssensor, insbesondere zur Verwendung in einem solchen Verfahren, durch welchen sequenziell für mehrere Teilsektoren innerhalb eines Erfassungswinkelbereichs Abstandswerte zu Objekten in der Umgebung des Kraftfahrzeugs bestimmbar sind, ist ein mit der Reichweite des Abstandssensors korrelierter Messparameter des Abstandssensors unter den Teilsektoren variierbar.

Ausgehend von dem oben genannten Stand der Technik liegt der Erfindung somit die Aufgabe zugrunde, einen optische Abstrahlvorrichtung der oben genannten Art, einen Laserscanner mit einer solchen optischen Abstrahlvorrichtung, ein Fahrassistenzsystem mit einem solchen Laserscanner, ein Fahrzeug mit einem solchen Laserscanner und ein Fahrzeug mit einem solchen Fahrassistenzsystem anzugeben, die kostengünstig herzustellen sind, einfach anwendbar sind, einen großen Erfassungswinkelbereich abdecken und dabei in relevanten Bereichen eine hohe Auflösung aufweisen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit eine optische Abstrahlvorrichtung für Laserpulse angegeben, insbesondere zur Verwendung in einem Lidar zur Verwendung in einem Fahrzeug, mit einer Lasereinheit, die ausgeführt ist, Laserpulse abzustrahlen, und einer Ablenkeinheit, die im Strahlengang der von der Lasereinheit abgestrahlten Laserpulse angeordnet ist, und die von der Lasereinheit abgestrahlten Laserpulse in einem Ablenkbereich ablenkt, wobei die optische Abstrahlvorrichtung eine Optik aufweist, die im Strahlengang der von der Lasereinheit abgestrahlten Laserpulse hinter der Ablenkeinheit in deren Ablenkbereich angeordnet ist, wobei die Optik wenigstens einen ersten Bereich und wenigstens einen zweiten Bereich aufweist, wobei der wenigstens eine zweite Bereich eine Linsenform zur Brechung der Laserpulse aufweist.

Erfindungsgemäß ist weiterhin ein Laserscanner mit einer solchen optischen Abstrahlvorrichtung und einer Sensoreinheit zum Empfang einer Reflektion des abgestrahlten Laserpulses angegeben.

Erfindungsgemäß ist außerdem ein Fahrassistenzsystem mit einem solchen Laserscanner angegeben.

Weiter ist erfindungsgemäß ein Fahrzeug mit einem solchen Laserscanner angegeben.

Erfindungsgemäß ist zusätzlich ein Fahrzeug mit einem solchen Fahrassistenzsystem angegeben.

Grundidee der vorliegenden Erfindung ist es also, durch die Optik eine selektive Veränderung, d.h. Aufweitung oder Verengung, in dem Ablenkbereich, im Weiteren auch Erfassungswinkelbereich oder Field of View genannt, der optischen Abstrahlvorrichtung in dem wenigstens einen zweiten Bereich zu bewirken. Da der Ablenkbereich auch dem Winkelbereich entspricht, in dem Reflektionen des abgestrahlten Laserpulses von der Sensoreinheit des Laserscanners empfangen werden, können die Begriffe Ablenkbereich und Erfassungswinkelbereich im Wesentlichen synonym verwendet werden, selbst wenn die Erfassung der Reflektionen der Laserpulse unabhängig von der optischen Abstrahlvorrichtung ist. Es ergibt sich einerseits, dass der Erfassungswinkelbereich der optischen Abstrahlvorrichtung insgesamt verändert wird, und andererseits, dass gleichzeitig erste und zweite Bereiche mit einer unterschiedlicher Präzision erfasst werden können. Somit kann mit einer einzigen optischen Abstrahlvorrichtung bzw. mit einem einzigen LiDAR bzw. Laserscanner beispielsweise ein Erfassungswinkelbereich von deutlich über 100° welche die optische Abstrahlvorrichtung bzw. der Laserscanner typischerweise ohne Optik aufweist, erreicht werden, beispielsweise 140°oder mehr. Dadurch kann eine Notwendigkeit entfallen, für Einsatzzwecke wie beispielsweise eine Abdeckung einer Seite des Fahrzeugs, zwei nebeneinander angeordnete LiDAR oder Laserscanner zu verwenden. Allerdings ergibt sich durch den wenigstens einen zweiten Bereich, dass eine von der Ablenkeinheit erzielte Winkelauflösung, typischerweise etwa 0,1° in dem wenigstens einen zweiten Bereich ebenfalls verändert wird. Diese Veränderung ergibt sich aber nicht für den gesamten Ablenkbereich. Gleichzeitig können bestimmte Bereiche in dem Erfassungswinkelbereich ohne die Veränderung in dem wenigstens einen zweiten Bereich erfasst werden, so dass eine Winkelauflösung der Ablenkeinheit erhalten werden kann oder nur geringfügig reduziert wird.

Dabei bedeutet die Ausgestaltung des wenigstens einen zweiten Bereichs mit einer Linsenform, dass der wenigstens eine zweite Bereich nach der Art einer optischen Linse ausgestaltet ist. Dadurch erfolgt in dem wenigstens einen zweiten Bereich an den Grenzflächen der Optik eine Brechung der Laserpulse, was zur Veränderung des Ablenkbereichs führt.

Erfindungsgemäß weist der wenigstens eine zweite Bereich eine konkave Linsenform auf. Entsprechend ist der wenigstens eine zweite Bereich nach der Art einer Zerstreuungslinse ausgeführt. Entsprechend erfolgt durch die Optik eine selektive Aufweitung des Ablenkbereichs in dem wenigstens einen zweiten Bereich. Es ergibt sich somit, dass der Erfassungswinkelbereich der optischen Abstrahlvorrichtung vergrößert wird, und andererseits, dass gleichzeitig erste und zweite Bereiche mit einer unterschiedlichen Präzision erfasst werden können. Somit kann mit einer einzigen optischen Abstrahlvorrichtung bzw. mit einem einzigen LiDAR bzw. Laserscanner beispielsweise ein Erfassungswinkelbereich von deutlich über 100°, welche die optische Abstrahlvorrichtung bzw. der Laserscanner typischerweise ohne die Optik aufweist, erreicht werden, beispielsweise 140°oder mehr. Dad urch entfällt eine Notwendigkeit, für Einsatzzwecke wie beispielsweise eine Abdeckung einer Seite des Fahrzeugs zwei nebeneinander angeordnete Laserscanner zu verwenden. Dabei ergibt sich durch den wenigstens einen zweiten Bereich, dass eine von der Ablenkeinheit erzielte Winkelauflösung, typischerweise etwa 0,1°, in dem wenigstens einen zweiten Bereich ebenfalls verändert wird, nicht jedoch zwangsläufig in dem wenigstens einen ersten Bereich. Somit können bestimmte Bereiche in dem Erfassungswinkelbereich, die durch den wenigstens einen ersten Bereich definiert sind, ohne die Veränderung der Winkelauflösung in dem wenigstens einen zweiten Bereich erfasst werden, so dass eine Winkelauflösung der Ablenkeinheit erhalten werden kann oder nur geringfügig reduziert wird.

Der wenigstens eine zweite Bereich kann somit beispielsweise bi-konkav, plan-konkav, oder konvex-konkav ausgeführt sein. Die konkave Form des wenigstens einen zweiten Bereichs unterscheidet sich also von der Ausgestaltung des wenigstens einen ersten Bereichs, um die selektive Aufweitung des Ablenkbereichs zu erzielen.

Erfindungsgemäß weist der erste Bereich eine Linsenform zur Brechung der Laserpulse auf, wobei sich die Linsenform des wenigstens einen ersten Bereichs von der Linsenform des wenigstens einen zweiten Bereichs unterscheidet. Somit bewirkt die Optik über den gesamten Erfassungswinkelbereich der optischen Abstrahlvorrichtung eine Veränderung der Abstrahlung der Laserpulse, die allerdings selektiv unterschiedlich in den ersten und zweiten Bereichen ist. Entsprechendes gilt für die Winkelauflösung der optischen Abstrahlvorrichtung. Die Linsenform der ersten und zweiten Bereiche kann dabei prinzipiell gleichartig, beispielsweise beide Bereiche als konkave Bereiche mit einer unterschiedlichen Krümmung bzw. Brennweite, ausgeführt sein.

Erfindungsgemäß weist die Linsenform des wenigstens einen ersten Bereichs und des wenigstens einen zweiten Bereichs jeweils eine konkave Form auf, wobei die Linsenform des wenigstens einen ersten Bereichs eine geringere Krümmung als die Linsenform des wenigstens einen zweiten Bereichs aufweist. Die Form des wenigstens einen ersten Bereichs ist somit weniger stark ausgeprägt als die des wenigstens einen zweiten Bereichs, so dass der Erfassungswinkelbereich in dem ersten Bereich weniger aufgeweitet wird als in dem zweiten Bereich.

Erfindungsgemäß bildet der wenigstens eine erste Bereich einen Mittelbereich der Optik, und der wenigstens eine zweite Bereich bildet einen Randbereich der Optik. Dabei ist es nicht erforderlich, dass der Randbereich den Mittelbereich vollständig umgibt. Hier können auch von mehreren zweiten Bereichen einzelne Segmente gebildet werden. Es erfolgt in dem Randbereich durch die Linsenform des wenigstens einen zweiten Bereichs eine Veränderung des Erfassungswinkelbereichs und eine damit einhergehende Veränderung der Winkelauflösung. Beispielsweise kann in dem Randbereich durch die Linsenform des wenigstens einen zweiten Bereichs eine Aufweitung des Erfassungswinkelbereichs und eine damit einhergehende Reduktion der Winkelauflösung

In vorteilhafter Ausgestaltung der Erfindung weist die Optik einen ersten Bereich und zwei zweite Bereiche auf, wobei sich die zwei zweiten Bereiche an gegenüberliegenden Seiten an den Mittelbereich der Optik anschließen. Bei Anwendung im Bereich "sehen" wird oftmals zwischen einer horizontalen und einer vertikalen Ausgestaltung des Erfassungswinkelbereichs unterschieden. Dies liegt unter anderem daran, dass relevante Objekte typischerweise auf derselben oder einer ähnlichen Höhe angeordnet sind. Somit kann der Erfassungswinkelbereich besonders in horizontaler Richtung vergrößert werden, um besonders viele relevante Informationen in der horizontalen Richtung erfassen zu können.

In vorteilhafter Ausgestaltung der Erfindung ist der wenigstens eine erste Bereich als Träger für den wenigstens einen zweiten Bereich ausgeführt. Der wenigstens eine zweite Bereich ist somit an dem wenigstens einen ersten Bereich gehalten. Gleichwohl wird die Optik üblicherweise an ihrem Randbereich gehalten, der oft mit wenigstens einem der zweiten Bereiche korrespondiert.

In vorteilhafter Ausgestaltung der Erfindung bilden der wenigstens eine erste Bereich und der wenigstens eine zweite Bereich einen kontinuierlichen Übergang. Damit wird sichergestellt, dass die optische Abstrahlvorrichtung den gesamten Erfassungswinkelbereich einerseits vollständig und andererseits ohne Überlappungen abdecken kann.

Erfindungsgemäß ist der wenigstens eine zweite Bereich ausgeführt, den Ablenkbereich für von der Ablenkeinheit abgelenkte Laserpulse zu vergrößern. Vorzugsweise ist der wenigstens eine zweite Bereich ausgeführt, den Ablenkbereich für von der Ablenkeinheit abgelenkte Laserpulse um einen Faktor 1,5 bis 4, besonders bevorzugt um einen Faktor von 2 bis 3, zu vergrößern. Mit einer entsprechenden Aufweitung kann bei einer entsprechenden Größe des wenigstens einen zweiten Bereichs eine gute Abdeckung erreicht werden, wobei die Winkelauflösung für die meisten Aufgaben ausreichend ist.

In vorteilhafter Ausgestaltung der Erfindung weist der wenigstens eine erste Bereich einen ersten Winkelbereich für von der Ablenkeinheit abgelenkte Laserpulse von 40°bis 100°, vorzugsweise von 50°bis 80°, besonders bevor zugt von etwa 60°auf. Mit diesem ersten Winkelbereich des wenigstens einen ersten Bereichs kann beispielsweise ein hinreichend großer erster Bereich gebildet werden, um beim Fahren mit dem Fahrzeug einen unmittelbaren Gefährdungsbereich, beispielsweise in Fahrtrichtung, mit einer hohen Genauigkeit mit der optischen Abstrahlvorrichtung bzw. dem Lidar oder Laserscanner abdecken zu können.

In vorteilhafter Ausgestaltung der Erfindung ist die Optik aus einem für Laserpulse der Lasereinheit durchlässigen Glas oder Kunststoff gefertigt. Derartige Materialien können mit unterschiedlichen Brechungsindices bereitgestellt werden, um eine geeignete Brechung der Laserpulse an ihren Grenzflächen zu erreichen. Kunststoff zeichnet sich dabei üblicherweise mit einem gegenüber Glas geringeren Gewicht aus.

In vorteilhafter Ausgestaltung der Erfindung ist die Ablenkeinheit als nicht-mechanische Ablenkeinrichtung ausgeführt. Es gibt verschiedene Arten von nicht-mechanischen Ablenkeinrichtungen, die sich üblicherweise gegenüber rein mechanischen Ablenkeinrichtungen durch eine erhöhte Geschwindigkeit der Ablenkung auszeichnen und damit die Bereitstellung von schnellen Laserscannern ermöglichen. Zu den nicht-mechanischen Ablenkeinrichtungen gehören beispielsweise Mikroscanner, im englischen micro-scanner bzw. micro-scanning mirror. Bei Mikroscannern wird die Ablenkung typischerweise über einen einzelnen Spiegel erzeugt. Eine weitere, nicht-mechanische Ablenkeinrichtung betrifft einen "scannable electro-evanescent optical refractor" (SEEOR), der beispielsweise Flüssigkristalltechnologie umfassen kann.

Nachfolgend wird die Erfindung unter Bezugnahme auf die anliegende Zeichnung näher erläutert, wobei hier anstatt der erfindungsgemäß vorgesehenen konkaven Linsenform des ersten Bereichs eine alternative nicht durch die Erfindung abgedeckte Linsenform verwendet wird.

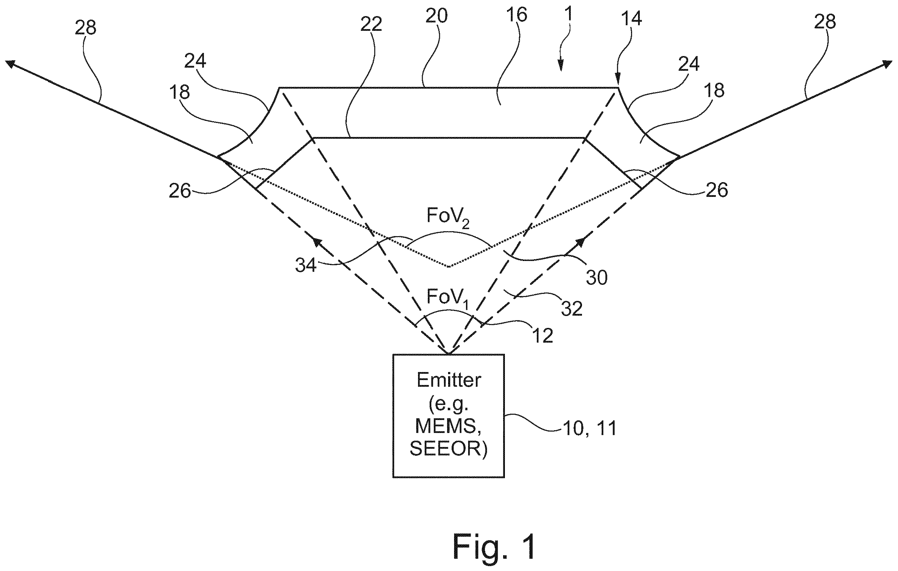

Es zeigt
- Fig. 1: eine schematische Schnittansicht einer optischen Abstrahlvorrichtung eines Laserscanners für ein Fahrassistenzsystem eines Fahrzeugs mit einer Lasereinheit, einer Ablenkeinheit und einer Optik.

Die Figur 1 zeigt eine optische Abstrahlvorrichtung 1. Die optische Abstrahlvorrichtung 1 ist Teil eines Laserscanners für ein Fahrassistenzsystem eines Fahrzeugs.

Die optische Abstrahlvorrichtung 1 umfasst eine Lasereinheit 10, die einen Laserpuls 28 abstrahlt. Die optische Abstrahlvorrichtung 1 umfasst weiter eine Ablenkeinheit 11, die den abgestrahlten Laserpuls 28 in einem Ablenkbereich 12 ablenkt. Der Ablenkbereich 12 wird auch als field of view (FoV) bezeichnet und entspricht einem Erfassungswinkelbereich, der von der optischen Abstrahlvorrichtung 1 mit abgestrahlten Laserpulsen 28 abgedeckt werden kann. In diesem Ausführungsbeispiel ist die Lasereinheit 10 integral mit der Ablenkeinheit 11 ausgeführt. In diesem Ausführungsbeispiel erzeugt die Ablenkeinheit 11 einen Ablenkbereich 12 von etwa 100° mit einer Winkelauflösung von etwa 0,1°. Die Ablenkeinheit 11 ist als nicht-mechanische Ablenkeinrichtung 11 ausgeführt. In diesem Ausführungsbeispiel ist die Ablenkeinheit 11 als Mikroscanner, im englischen micro-scanner bzw. micro-scanning mirror, oder MEMS, ausgeführt. In einer alternativen Ausführungsform ist die Ablenkeinheit 11 mit einem "scannable electro-evanescent optical refractor" (SEEOR), der hier Flüssigkristalltechnologie umfasst, ausgeführt.

Die optische Abstrahlvorrichtung 1 weist weiter eine Optik 14 auf, die im Ablenkbereich 12 der Ablenkeinheit 11 angeordnet ist. Die Optik 14 ist aus einem für Laserpulse 28 der Lasereinheit 10 durchlässigen Glas oder Kunststoff gefertigt. Die Optik 14 weist einen ersten Bereich 16 und zwei zweite Bereiche 18 auf, wobei die zwei zweiten Bereiche 18 sich an gegenüberliegenden Seiten an den ersten Bereich 16 der Optik 14 anschließen. Der erste Bereich 16 und die zwei zweiten Bereiche 18 weisen dabei einen kontinuierlichen Übergang auf. Der erste Bereich 16 bildet einen Mittelbereich der Optik 14, und die zwei zweiten Bereiche 18 bilden zwei Randbereiche in horizontaler Erstreckung.

Der erste Bereich 16 ist mit einer ebenen Außenfläche 20, die an einer der Ablenkeinheit 11 abgewandten Seite der Optik 14 angeordnet ist, und mit einer ebenen Innenfläche 22, die an einer der Ablenkeinheit 11 zugewandten Seite der Optik 14 angeordnet ist, ausgeführt, so dass Laserpulse 28 im Wesentlichen ohne Ablenkung oder Brechung durch den ersten Bereich 16 hindurchtreten können. Der erste Bereich 16 umfasst einen ersten Winkelbereich 30 für von der Ablenkeinheit 11 abgestrahlte Laserpulse 28 von etwa 60°.

Die zwei zweiten Bereiche 18 weisen eine konkave Linsenform zur Ablenkung bzw. Brechung des abgestrahlten Laserpulses 28 auf. Entsprechend sind die zwei zweiten Bereiche 18 jeweils nach der Art einer Zerstreuungslinse ausgestaltet. In diesem Ausführungsbeispiel sind die zwei zweiten Bereiche 18 plan-konkav ausgeführt mit einer konkav gewölbten Außenfläche 24 und einer ebenen Innenfläche 26. Jeder der zwei zweiten Bereiche 18 umfasst einen zweiten Winkelbereich 32 für von der Ablenkeinheit 11 abgestrahlte Laserpulse 28 von etwa 20°. Die Wölbung der Außenfläche 24 der zweiten Bereiche 18 ist derart ausgeführt, dass der Ablenkbereich 12 für von der Ablenkeinheit 11 abgestrahlte Laserpulse 28 um einen Faktor von etwa 2,25 vergrößert wird. Entsprechend wird jeder der zwei zweiten Winkelbereiche 32 von etwa 20°auf 45° aufgeweitet.

Mit dem ersten Bereich 16 und den zwei zweiten Bereichen 18 ergibt sich für die Optik 14 insgesamt ein Abdeckungsbereich 34 mit einem Winkel von etwa 150°. Der Abdeckungsbereich 34 der Optik 14 ist also gegenüber dem Ablenkbereich 12 der Ablenkeinheit 11 vergrößert. Dabei wird der erste Bereich 16 mit der Winkelauflösung der Ablenkeinheit 11 erfasst, während in den zwei zweiten Bereichen 18 die Winkelauflösung reduziert ist, nämlich in Übereinstimmung mit der Vergrößerung in den zweiten Bereichen 18.

Der erste Bereich 16 dient in dieser Ausführungsform als Träger für die zwei zweiten Bereiche 18, wobei die zwei zweiten Bereiche 18 an dem ersten Bereich 16 gehalten sind. Die Optik 14 ist insgesamt an ihrem Randbereich gehalten.

Der Laserscanner umfasst zusätzlich zu der beschriebenen optischen Abstrahlvorrichtung 1 eine hier nicht gezeigte Empfangseinheit zum Empfang einer Reflektion der abgestrahlten Laserpulse 28. In einer alternativen Ausführungsform ist der Laserscanner ausgeführt, die Reflektion der abgestrahlten Laserpulse 28 auch durch die Optik 14 zu empfangen.

### Bezugszeichenliste

| | |
|---|---|
| optische Abstrahlvorrichtung | 1 |
| Lasereinheit | 10 |
| Ablenkeinheit | 11 |
| Ablenkbereich (Ablenkeinheit) | 12 |
| Optik | 14 |
| erster Bereich | 16 |
| zweiter Bereich | 18 |
| Außenfläche (erster Bereich) | 20 |
| Innenfläche (erster Bereich) | 22 |
| Außenfläche (zweiter Bereich) | 24 |
| Innenfläche (zweiter Bereich) | 26 |
| Laserpuls, Laserstrahl | 28 |
| erster Winkelbereich | 30 |
| zweiter Winkelbereich | 32 |
| Abdeckungsbereich (Optik) | 34 |

## Patentansprüche

1. Optische Abstrahlvorrichtung (1) für Laserpulse (28), insbesondere zur Verwendung in einem Lidar zur Verwendung in einem Fahrzeug, mit
einer Lasereinheit (10), die ausgeführt ist, Laserpulse (28) abzustrahlen, und
einer Ablenkeinheit (11), die im Strahlengang der von der Lasereinheit (10) abgestrahlten Laserpulse (28) angeordnet ist, und die von der Lasereinheit (10) abgestrahlten Laserpulse (28) in einem Ablenkbereich (12) ablenkt,
wobei
die optische Abstrahlvorrichtung (1) eine Optik (14) aufweist, die im Strahlengang der von der Lasereinheit (10) abgestrahlten Laserpulse (28) hinter der Ablenkeinheit (11) in deren Ablenkbereich (12) angeordnet ist, wobei die Optik (14) wenigstens einen ersten Bereich (16) und wenigstens einen zweiten Bereich (18) aufweist, wobei der wenigstens eine zweite Bereich (18) eine Linsenform zur Brechung der Laserpulse (28) aufweist,
**dadurch gekennzeichnet, dass**
der wenigstens eine erste Bereich (16) einen Mittelbereich der Optik (14) bildet, und der wenigstens eine zweite Bereich (18) einen Randbereich der Optik (14) bildet, dass der wenigstens eine zweite Bereich (18) ausgeführt ist, den Ablenkbereich (12) für von der Ablenkeinheit (11) abgelenkte Laserpulse (28) zu vergrößern,
dass der erste Bereich (16) eine Linsenform zur Brechung der Laserpulse (28) aufweist, wobei sich die Linsenform des wenigstens einen ersten Bereichs (16) von der Linsenform des wenigstens einen zweiten Bereichs (18) unterscheidet,
und
dass die Linsenform des wenigstens einen ersten Bereichs (16) und des wenigstens einen zweiten Bereichs (18) jeweils eine konkave Form aufweist, wobei die Linsenform des wenigstens einen ersten Bereichs (16) eine geringere Krümmung als die Linsenform des wenigstens einen zweiten Bereichs (18) aufweist, so dass der Ablenkbereich (12) in dem ersten Bereich (16) weniger aufgeweitet wird, als in dem zweiten Bereich (18).

2. Optische Abstrahlvorrichtung (1) nach Anspruch 1, **dadurch gekennzeichnet, dass** die Optik (14) einen ersten Bereich (16) und zwei zweite Bereiche (18) aufweist, wobei sich die zwei zweiten Bereiche (18) an gegenüberliegenden Seiten an den Mittelbereich der Optik (14) anschließen.

3. Optische Abstrahlvorrichtung (1) nach einem der vorhergehenden Ansprüche,
**dadurch gekennzeichnet, dass**
der wenigstens eine erste Bereich (16) als Träger für den wenigstens einen zweiten Bereich (18) ausgeführt ist.

4. Optische Abstrahlvorrichtung (1) nach einem der vorhergehenden Ansprüche,
**dadurch gekennzeichnet, dass**
der wenigstens eine erste Bereich (16) und der wenigstens eine zweite Bereich (18) einen kontinuierlichen Übergang bilden.

5. Optische Abstrahlvorrichtung (1) nach einem der vorhergehenden Ansprüche,
**dadurch gekennzeichnet, dass**
der wenigstens eine erste Bereich (16) einen ersten Winkelbereich (30) für von der Ablenkeinheit (11) abgelenkte Laserpulse (28) von 40° bis 100°, vorzugsweise von 50° bis 80°, besonders bevorzugt von etwa 60° aufweist.

6. Optische Abstrahlvorrichtung (1) nach einem der vorhergehenden Ansprüche,
**dadurch gekennzeichnet, dass**
die Optik (14) aus einem für Laserpulse (28) der Lasereinheit (10) durchlässigen Glas oder Kunststoff gefertigt ist.

7. Laserscanner mit einer optischen Abstrahlvorrichtung (1) nach einem der vorhergehenden Ansprüche und einer Sensoreinheit zum Empfang einer Reflektion von abgestrahlten Laserpulsen (28).

8. Fahrassistenzsystem mit einem Laserscanner nach dem vorhergehenden Anspruch 7.

9. Fahrzeug mit einem Laserscanner nach dem vorhergehenden Anspruch 7.

10. Fahrzeug mit einem Fahrassistenzsystem nach dem vorhergehenden Anspruch 8.

## Claims

1. Optical emission apparatus (1) for laser pulses (28), in particular for use in a lidar for use in a vehicle, comprising
a laser unit (10) designed to emit laser pulses (28) and a deflection unit (11), which is arranged in the beam path of the laser pulses (28) emitted by the laser unit (10) and deflects the laser pulses (28) emitted by the laser unit (10) in a deflection region (12),
wherein
the optical emission apparatus (1) has an optical unit (14), which is arranged in the beam path of the laser pulses (28) emitted by the laser unit (10) downstream of the deflection unit (11) within its deflection region (12), wherein the optical unit (14) has at least one first region (16) and at least one second region (18), wherein the at least one second region (18) has a lens shape for refracting the laser pulses (28),
**characterized in that**
the at least one first region (16) forms a central region of the optical unit (14) and the at least one second region (18) forms a peripheral region of the optical unit (14),
**in that** the at least one second region (18) is designed to enlarge the deflection region (12) for laser pulses (28) deflected by the deflection unit (11),
**in that** the first region (16) has a lens shape for refracting the laser pulses (28), wherein the lens shape of the at least one first region (16) differs from the lens shape of the at least one second region (18),
and
**in that** the lens shape of the at least one first region (16) and of the at least one second region (18) in each case has a concave shape, wherein the lens shape of the at least one first region (16) has a smaller curvature than the lens shape of the at least one second region (18), with the result that the deflection region (12) is widened less in the first region (16) than in the second region (18).

2. Optical emission apparatus (1) according to Claim 1, **characterized in that**
the optical unit (14) has a first region (16) and two second regions (18), wherein the two second regions (18) are connected on opposite sides to the central region of the optical unit (14).

3. Optical emission apparatus (1) according to either of the preceding claims, **characterized in that**
the at least one first region (16) is designed as a carrier for the at least one second region (18).

4. Optical emission apparatus (1) according to any of the preceding claims, **characterized in that**
the at least one first region (16) and the at least one second region (18) form a continuous transition.

5. Optical emission apparatus (1) according to any of the preceding claims, **characterized in that**
the at least one first region (16) has a first angular range (30) of from 40° to 100°, preferably from 50° to 80°, with particular preference of approximately 60°, for laser pulses (28) deflected by the deflection unit (11).

6. Optical emission apparatus (1) according to any of the preceding claims, **characterized in that**
the optical unit (14) is made from a glass or plastic that is transmissive for laser pulses (28) from the laser unit (10).

7. Laser scanner comprising an optical emission apparatus (1) according to any of the preceding claims and a sensor unit for receiving a reflection of emitted laser pulses (28).

8. Driver assistance system comprising a laser scanner according to the preceding Claim 7.

9. Vehicle comprising a laser scanner according to the preceding Claim 7.

10. Vehicle having a driver assistance system according to the preceding Claim 8.

## Revendications

1. Dispositif de rayonnement optique (1) pour des impulsions laser (28), en particulier pour l'utilisation dans un lidar destiné à être utilisé dans un véhicule, comportant
une unité laser (10) qui est conçue pour émettre des impulsions laser (28) et une unité de déviation (11) qui est agencée dans le chemin de rayonnement des impulsions laser (28) émises par l'unité laser (10), et qui dévie les impulsions laser (28) émises par l'unité laser (10) dans une zone de déviation (12),
dans lequel
le dispositif de rayonnement optique (1) comporte une optique (14) qui est agencée dans le chemin de rayonnement des impulsions laser (28) émises par l'unité laser (10) derrière l'unité de déviation (11) dans sa zone de déviation (12), l'optique (14) comprenant au moins une première zone (16) et au moins une deuxième zone (18), la ou les deuxièmes zones (18) présentant une forme de lentille pour la réfraction des impulsions laser (28),
**caractérisé en ce que**
la ou les premières zones (16) forment une zone centrale de l'optique (14), et la ou les deuxièmes zones (18) forment une zone de bord de l'optique (14), **en ce que** la ou les deuxièmes zones (18) sont réalisées de manière à agrandir la zone de déviation (12) pour les impulsions laser (28) déviées par l'unité de déviation (11), **en ce que** la première zone (16) présente une forme de lentille pour la réfraction des impulsions laser (28), la forme de lentille de la ou des premières zones (16) étant différente de la forme de lentille de la ou des deuxièmes zones (18), et
**en ce que** la forme de lentille de la ou des premières zones (16) et de la ou des deuxièmes zones (18) présente respectivement une forme concave, la forme de lentille de la ou des premières zones (16) présentant une courbure plus faible que la forme de lentille de la ou des deuxièmes zones (18), de sorte que la zone de déviation (12) est moins élargie dans la première zone (16) que dans la deuxième zone (18).

2. Dispositif de rayonnement optique (1) selon la revendication 1, **caractérisé en ce que** le système optique (14) comporte une première zone (16) et deux deuxièmes zones (18), les deux deuxièmes zones (18) se raccordant à la zone centrale du système optique (14) sur des côtés opposés.

3. Dispositif de rayonnement optique (1) selon l'une quelconque des revendications précédentes, **caractérisé en ce que**
la ou les premières zones (16) sont conçues sous forme de support pour la ou les deuxièmes zones (18).

4. Dispositif de rayonnement optique (1) selon l'une quelconque des revendications précédentes, **caractérisé en ce que**
la ou les premières zones (16) et la ou les deuxièmes zones (18) forment une transition continue.

5. Dispositif de rayonnement optique (1) selon l'une quelconque des revendications précédentes, **caractérisé en ce que**
la ou les premières zones (16) présentent une première plage angulaire (30) pour les impulsions laser (28) déviées par l'unité de déviation (11) de 40° à 100°, de préférence de 50° à 80°, de manière particulièrement préférée d'environ 60°.

6. Dispositif de rayonnement optique (1) selon l'une quelconque des revendications précédentes, **caractérisé en ce que**
l'optique (14) est réalisée en verre ou en matière plastique perméable aux impulsions laser (28) de l'unité laser (10).

7. Balayeur laser comportant un dispositif de rayonnement optique (1) selon l'une quelconque des revendications précédentes et une unité de détection destinée à recevoir une réflexion d'impulsions laser (28) rayonnées.

8. Système d'assistance à la conduite comprenant un balayeur laser selon la revendication 7 précédente.

9. Véhicule comprenant un balayeur laser selon la revendication 7 précédente.

10. Véhicule comprenant un système d'assistance à la conduite selon la revendication 8 précédente.
